# EUROPÄISCHE PATENTANMELDUNG

(11) **EP 2 443 917 A1**
(43) Veröffentlichungstag der Anmeldung: **25.04.2012**
(21) Anmeldenummer: 11008386.2
(22) Anmeldetag: 18.10.2011
(51) Int. Cl.: A01D 45/02

(54) **Maisspindelwerfer**

(30) Priorität: 22.10.2010 AT 17572010
(71) Anmelder: Schrattenecker, Franz, A-4773 Eggerding (AT)
(72) Erfinder: Schattinger, Roland, 8510 Stainz (AT)
(74) Vertreter: Zinnecker, Armin

(57) **Zusammenfassung**

Die Erfindung betrifft eine Vorrichtung (1) zum Aussondern und Fördern von insbesondere kontinuierlich in einer Erntemaschine anfallenden Pflanzenteilen, umfassend ein Förderelement (2) und ein im Bereich eines Endes des Förderelementes (2) angeordnetes Fördergebläse (3). Um schwerere von leichteren Pflanzenteilen auf effiziente Weise trennen zu können, ist erfindungsgemäß zumindest eine Luftturbine (5) vorgesehen, welche in einem Bereich über dem Förderelement (2) einen Luftstrom auf die in die Vorrichtung (1) eingebrachten und zum Förderelement (2) fallenden Pflanzenteile erzeugt. Des Weiteren betrifft die Erfindung eine Verwendung einer derartigen Vorrichtung (1) sowie ein Verfahren zum Aussondern und Fördern von insbesondere kontinuierlich in einer Erntemaschine anfallenden Pflanzenteilen, insbesondere von Maisspindeln (Fig. 1).

## Beschreibung

Die Erfindung betrifft eine Vorrichtung zum Aussondern und Fördern von insbesondere kontinuierlich in einer Erntemaschine anfallenden Pflanzenteilen, umfassend ein Förderelement und ein im Bereich eines Endes des Förderelementes angeordnetes Fördergebläse. Im Bereich oberhalb des Fördergebläses kann ein Wurfrohr angeordnet sein, über das die Pflanzenteile durch das Fördergebläse förderbar sind.

Des Weiteren betrifft die Erfindung eine Verwendung einer derartigen Vorrichtung zum Fördern und Trennen von Maisspindeln und Maislieschen.

Schließlich betrifft die Erfindung ein Verfahren zum Aussondern und Fördern von insbesondere kontinuierlich in einer Erntemaschine anfallenden Pflanzenteilen, insbesondere von Maisspindeln, bei dem die Pflanzenteile mittels eines Fördergebläses über eine vorgegebene Höhe gefördert werden.

Maisspindeln, das sind entkernte Maiskolben, stellen einen zunehmend nachgefragten Rohstoff dar, welcher vielseitig einsetzbar ist. Maisspindeln werden verwendet als Brennstoff, Einstreumaterial in der Tierhaltung, Fallschutz für Spielplätze und als Rohfaserträger; außerdem können Maisspindeln als Rohstoff zur Produktion von Füll- und Dämmstoffen, Poliermitteln, Ölbindemitteln und Filterstoffen dienen. Deshalb sind im Bereich der Landwirtschaft Geräte gefragt, mit denen effizient Maisspindeln von den Hüllblättern, den sogenannten Maislieschen, getrennt und einer Sammlung zugeführt werden können.

Gemäß dem Stand der Technik sind Geräte zum Sammeln von Maisspindeln bekannt. In der US 4,188,160 A ist eine Vorrichtung beschrieben, welche an einem Mähdrescher angehängt werden kann und mit der vom Mähdrescher ausgestoßene Pflanzenteile über ein Rohr in ein separates Behältnis, beispielsweise in einen Anhänger, gefördert werden können. Bevorzugt werden sämtliche ausgestoßene Pflanzenteile von der Vorrichtung gefördert, durch eine verstellbare Ablenkplatte kann aber auch eine grobe Trennung der Pflanzenteile erfolgen. Dabei muss im Fall einer Maisernte die Trennung der ausgestoßenen Pflanzenteile in Maisspindeln und Maislieschen als wenig effizient angesehen werden, da sowohl unerwünschte Maislieschen in das Behältnis gefördert als auch Maisspindeln aus der Vorrichtung auf ein Feld ausgestoßen werden können.

In der EP 2 210 471 A2 ist ein selbstfahrendes Erntegerät für die Maisernte beschrieben, in welchem bei einer Maisernte eine Aussonderung und Sammlung der Maisspindeln erfolgen soll. Das selbstfahrende Erntegerät entspricht im Wesentlichen einem herkömmlichen Mähdrescher, bei welchem angrenzend an Vorrichtungen zum Aussondern und Sammeln von Maiskörnern ein Spindelsieb in einem Auswurfkanal angeordnet ist, welches eine Trennung von Maisspindeln und Maislieschen herbeiführen soll. Jene Maisspindeln, die durch das Spindelsieb hindurchfallen, werden von Förderschnecken in ein externes Behältnis gefördert. Bei dem beschriebenen Erntegerät ist von Nachteil, dass die für die Aussonderung der Maisspindeln notwendigen Teile bzw. Vorrichtungen im zentralen Mechanismus des Mähdreschers angeordnet und daher nur auf umständliche Weise anbringbar sind. Ein Um- bzw. Aufrüsten eines vorhandenen Mähdreschers ist daher komplex sowie arbeits- und kostenintensiv. Auch ist bei bestehenden Maschinen nur selten der für die entsprechenden Vorrichtungen erforderliche Platz im Inneren des Mähdreschers vorhanden.

Aus der US 2008/0261668 A1 ist ein Mähdrescher bekannt, in dem ein Gebläse vorgesehen ist, das unterhalb eines Förderelements angeordnet ist und das von unten durch ein Gitter auf Pflanzenteile einwirkt.

Die US 4,332,261 zeigt einen weiteren Mähdrescher.

Der Erfindung liegt demnach die Aufgabe zugrunde, eine Vorrichtung der eingangs genannten Art anzugeben, mit der Maisspindeln und Maislieschen oder allgemein Pflanzenteile im Zuge eines Erntevorganges effizient voneinander getrennt werden können und welche mit herkömmlichen Mähdreschern auf einfache Weise kombiniert werden kann.

Eine weitere Aufgabe der Erfindung ist es, eine Verwendung einer derartigen Vorrichtung anzugeben.

Außerdem ist es Aufgabe der Erfindung, ein Verfahren der eingangs genannten Art anzugeben, mit dem schwerere von leichteren Pflanzenteilen, insbesondere Maisspindeln von Maislieschen, effizient getrennt werden können.

Die erste Aufgabe wird dadurch gelöst, dass bei einer Vorrichtung der eingangs genannten Art zumindest eine Luftturbine vorgesehen ist, welche in einem Bereich über dem Förderelement einen Luftstrom auf die in die Vorrichtung eingebrachten und zum Förderelement fallenden Pflanzenteile erzeugt.

Ein mit der Erfindung erzielter Vorteil ist insbesondere darin zu sehen, dass auf effiziente Weise eine Trennung von schwereren und leichteren Pflanzenteilen, insbesondere von Maisspindeln und Maislieschen, erreicht wird, da diese gänzlich unterschiedliche Windangriffsflächen bzw. Masse-zu-Strömungswiderstand-Verhältnisse aufweisen. Dabei kann der Trennvorgang kontinuierlich ausgeführt werden und zeitgleich mit dem Erntebetrieb eines Mähdreschers erfolgen. Außerdem ist die erfindungsgemäße Vorrichtung relativ einfach an landwirtschaftlichen Maschinen anbringbar, insbesondere kann die Vorrichtung im Heckbereich eines Mähdreschers angehängt werden, wo Pflanzenteile wie Maisspindeln und Maislieschen ausgeworfen werden.

Es hat sich bewährt, dass der durch die zumindest eine Luftturbine erzeugte Luftstrom in etwa waagrecht gerichtet ist. Dadurch ist der Luftstrom in etwa rechtwinkelig zu den zum Förderelement fallenden Pflanzenteilen ausgerichtet, greift dadurch bestmöglich an diesen an und sondert die leichteren Pflanzenteile effizient aus. Dabei kann der Luftstrom in eine Richtung gerichtet sein, welche um einen Winkel zwischen -20° und +20° von der Horizontalen abweicht.

Es ist von Vorteil, wenn ein Sieb in einem Bereich oberhalb des Förderelementes vorgesehen ist, auf welches die in die Vorrichtung eingebrachten Pflanzenteile fallen und durch welches der von der zumindest einen Luftturbine erzeugte Luftstrom gerichtet ist. Damit ist für eine längere Verweilzeit der eingebrachten Pflanzenteile im Luftstrom gesorgt, die schwereren Pflanzenteile fallen gegen den Luftstrom durch das Sieb bzw. Gitter und die leichteren Pflanzenteile werden vom Sieb abgewiesen und durch den Luftstrom wegbefördert. Insgesamt ergibt sich eine effiziente Trennung in leichtere und schwerere Pflanzenteile. Zweckmäßigerweise ist das Sieb geneigt ausgerichtet und derart angeordnet, dass Pflanzenteile, welche nicht durch das Sieb zum Förderelement fallen, aus der Vorrichtung ausscheiden. So können schwerere Pflanzenteile, welche durch das Sieb bzw. Gitter fallen, unter diesem gesammelt werden, leichtere Pflanzenteile wie schnell verrottende Maislieschen verbleiben oberhalb des Siebes und können auf ein Feld ausgebracht werden.

Um ein besseres Trennen der Pflanzenteile zu erreichen und ein Verstopfen bzw. Verlegen des Siebes zu vermeiden, kann ein Antrieb zum Rütteln des Siebes vorgesehen sein.

Es hat sich bewährt, dass im Bereich oberhalb des Förderelementes ein Rutschblech zum Einbringen der Pflanzenteile vorgesehen ist. Dadurch ist ein kontinuierliches, gleichmäßiges Zuführen von Pflanzenteilen im Zuge eines Erntevorganges möglich.

Zweckmäßigerweise ist das Förderelement als Förderschnecke ausgeführt. Dadurch können die ausgesonderten, schwereren Pflanzenteile gleichmäßig dem Fördergebläse zugeführt werden, wobei ein Verstopfen des Fördergebläses vermieden wird.

Es ist von Vorteil, wenn die Förderschnecke und das Fördergebläse koaxial angeordnet und deren Wellen durch ein Lager, insbesondere ein Wälzlager verbunden sind. So kann eine mit einem Gehäuse verbundene, zwischen Förderschnecke und Fördergebläse angeordnete Stütze, welche einen Förderquerschnitt einengen würde, vermieden werden.

Es hat sich bewährt, dass die Vorrichtung an eine landwirtschaftliche Maschine ankoppelbar ist. So können vorhandene landwirtschaftliche Maschinen kostengünstig und einfach auf- bzw. nachgerüstet werden. Zweckmäßigerweise sind das Fördergebläse, das Förderelement und die zumindest eine Luftturbine an eine externe Energieversorgung, insbesondere eine rotierende Welle der landwirtschaftlichen Maschine, ankoppelbar. Somit sind keine separaten Motoren zum Betrieb der Vorrichtung notwendig.

Eine weitere vorteilhafte Weiterbildung ist dadurch gekennzeichnet, daß im Bereich oberhalb des Fördergebläses ein Wurfrohr angeordnet ist, über das die Pflanzenteile durch das Fördergebläse förderbar sind. Um einen Auswurf von Pflanzenteilen in verschiedene Behältnisse, beispielsweise in nebenherfahrende Anhänger, zu ermöglichen, kann das Wurfrohr schwenkbar, höhenverstellbar und/oder einklappbar sein. Auch ein platzsparender Transport der Vorrichtung wird so ermöglicht. Dabei ist es von Vorteil, wenn das Wurfrohr hydraulisch gesteuert ist. Dadurch ist eine bequeme Bedienung und Steuerung des Wurfrohres möglich.

Die zweite Aufgabe der Erfindung wird dadurch gelöst, dass eine erfindungsgemäße Vorrichtung zum Fördern und Trennen von Maisspindeln und Maislieschen verwendet wird.
Dies stellt eine effiziente Methode dar, um einen vielseitig einsetzbaren Rohstoff, die Maisspindeln, zu gewinnen. Außerdem ist von Vorteil, dass die erfindungsgemäße Vorrichtung einfach an Mähdrescher ankoppelbar ist.

Die verfahrensmäßige Aufgabe der Erfindung wird dadurch gelöst, dass bei einem Verfahren der eingangs erwähnten Art ein zusätzlicher Luftstrom erzeugt und auf die einfallenden Pflanzenteile gerichtet wird, sodass leichtere von schwereren Pflanzenteilen, insbesondere Maislieschen von den Maisspindeln, getrennt werden.

Ein mit der Erfindung erzielter Vorteil ist insbesondere darin zu sehen, dass auf technisch einfache Weise eine effiziente Trennung der einfallenden Pflanzenteile in leichtere und schwerere Pflanzenteile erreicht wird. Insbesondere ist das Verfahren erfolgreich auf die Trennung bzw. Aussonderung von Maisspindeln und Maislieschen anwendbar, da Letztere leicht sind und eine große Windangriffsfläche haben.

Bevorzugt erfolgt das Trennen der leichteren von den schwereren Pflanzenteilen durch den zusätzlichen Luftstrom vor dem Fördern mittels des Fördergebläses. So können unerwünschte, leichtere Pflanzenteile vor deren Eintritt in das Fördergebläse ausgestoßen werden; nur die erwünschten, schwereren Pflanzenteile werden weitergefördert.

Es hat sich bewährt, dass der zusätzliche Luftstrom mit zumindest einer Luftturbine erzeugt und in etwa waagrecht ausgerichtet wird. Somit kreuzt der Luftstrom die in etwa vertikal herunterfallenden Pflanzenteile, wodurch die leichteren Pflanzenteile effizient ausgesondert werden.

Es ist von Vorteil, wenn die leichteren Pflanzenteile, insbesondere die Maislieschen, durch den Luftstrom weggeblasen und auf einem Boden gleichmäßig verteilt werden. So wird ein Einpflügen und anschließendes Verrotten der leichteren Pflanzenteile erleichtert bzw. beschleunigt.

Zweckmäßigerweise wird zum Trennen der leichteren von den schwereren Pflanzenteilen, insbesondere der Maislieschen von den Maisspindeln, zusätzlich ein Sieb verwendet. Auf diese Weise wird eine längere Verweilzeit der herabfallenden Pflanzenteile im Luftstrom und damit eine effizientere Trennung von leichteren und schwereren Pflanzenteilen erreicht.

Um das Sieb freizuhalten und ein Verstopfen zu vermeiden, kann der Luftstrom derart ausgerichtet werden, dass dieser durch das Sieb hindurchführt und die leichteren Pflanzenteile, insbesondere die Maislieschen, von diesem weggeblasen werden.

Es hat sich bewährt, dass die Pflanzenteile mit einem Förderelement, insbesondere mit einer Förderschnecke, zum Fördergebläse gefördert werden. So wird eine gleichmäßige Zuführung der Pflanzenteile in das Fördergebläse erreicht, wobei ein Verstopfen des Fördergebläses vermieden wird.

Bevorzugt wird der zusätzliche Luftstrom zum Trennen der leichteren von den schwereren Pflanzenteilen vor dem Förderelement erzeugt und auf die in Richtung zum Förderelement einfallenden Pflanzenteile gerichtet.

Zweckmäßigerweise werden die Pflanzenteile zumindest teilweise mittels eines Wurfrohres über eine vorgegebene Höhe gefördert. So können die ausgesonderten Pflanzenteile in verschiedene Behältnisse, beispielsweise in nebenherfahrende Anhänger mit hoher Umwandung bzw. großem Volumen, gefördert werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine perspektivische Darstellung eines erfindungsgemäßen Maisspindelwerfers;
Fig. 2 eine Frontalansicht eines erfindungsgemäßen Maisspindelwerfers;
Fig. 3 einen Schnitt durch einen Maisspindelwerfer entlang der Linie III-III in Fig. 2;
Fig. 4 eine seitliche Ansicht eines Maisspindelwerfers;
Fig. 5 eine aufgeschnittene Detailansicht eines Maisspindelwerfers im Bereich von Fördergebläse und Förderschnecke.

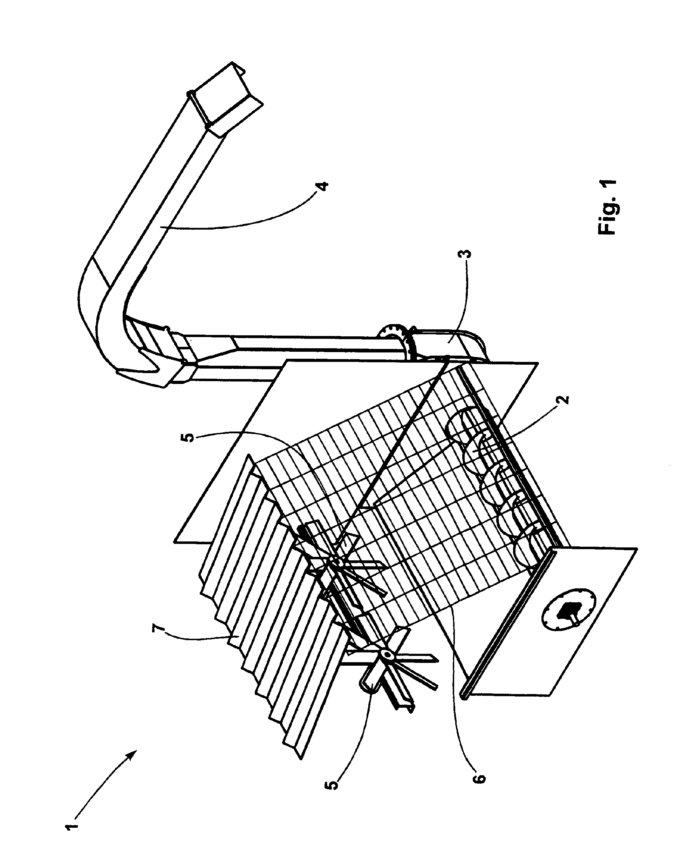

In Fig. 1 ist eine perspektivische Darstellung einer erfindungsgemäßen Vorrichtung 1 zum Aussondern und Fördern von Maisspindeln, kurz als Maisspindelwerfer bezeichnet, dargestellt. Zu einer besseren Veranschaulichung einer Funktionsweise der Vorrichtung 1 sind in Fig. 1 sowie auch in den folgenden Abbildungen Teile eines Gehäuses bzw. einer Verkleidung sowie einer Aufhängung weggelassen. Der Maisspindelwerfer ist derart konzipiert, dass dieser an einer Erntemaschine, insbesondere im hinteren Bereich eines Mähdreschers, angebracht werden kann, sodass kontinuierlich in der Erntemaschine anfallende Pflanzenteile, insbesondere Maisspindeln und Maislieschen, in die Vorrichtung 1 eingebracht werden bzw. in diese hineinfallen. Dabei werden als Maisspindeln die entkernten, d. h. von Maiskörnern befreiten Maiskolben, und als Maislieschen die Hüllblätter der Maiskolben bezeichnet. Die in dem Mähdrescher anfallenden Pflanzenteile gelangen auf ein Rutschblech 7 der Vorrichtung 1. Das Rutschblech 7 ist in einem oberen Bereich der Vorrichtung 1 angeordnet. Von diesem Rutschblech 7 fallen die Pflanzenteile in Richtung eines im Wesentlichen trichterförmigen Behältnisses, an dessen tiefster Stelle ein hier als Förderschnecke ausgebildetes Förderelement 2 angeordnet ist. Dabei überwinden die Pflanzenteile eine Fallhöhe im Bereich von 0,3 bis 3 m. In dem Bereich zwischen Rutschblech 7 und Förderelement 2 ist ein Sieb 6 derart angeordnet, dass Pflanzenteile, um in das trichterförmige Behältnis zu gelangen, durch das Sieb 6 hindurchfallen müssen. Weiter ist das Sieb 6 schräg ausgerichtet, sodass Pflanzenteile, welche nicht durch das Sieb 6 passen, auf diesem abrutschen bzw. abgleiten und nicht in das das Förderelement 2 umgebende, trichterförmige Behältnis gelangen können. In dem Bereich unter dem Rutschblech 7 sind zwei Luftturbinen 5 angeordnet, welche durch Rotation einen Luftstrom erzeugen, der in etwa waagrecht ausgerichtet ist und durch das Sieb 6 hindurchströmt. Somit müssen Pflanzenteile, welche vom Rutschblech 7 in Richtung Förderelement 2 fallen, den von den Luftturbinen 5 erzeugten Luftstrom durchqueren. Große und leichte Pflanzenteile mit einer geringen Massendichte und einer großen Windangriffsfläche werden durch den von den Luftturbinen 5 erzeugten Luftstrom von dem Sieb 6 weggeblasen, kleinere und schwerere Pflanzenteile mit einer größeren Massendichte und geringerem Luftwiderstand werden hingegen von dem Luftstrom kaum bis gar nicht abgelenkt und gelangen durch das Sieb 6 zur Förderschnecke. Eine Umdrehungszahl der Luftturbinen 5 ist kontinuierlich gesteuert und wird in Abhängigkeit der Feuchte der Maisspindeln und damit deren Masse eingestellt. Das Sieb 6 hat nicht nur die Funktion eines mechanischen Aussonderns von Pflanzenteilen gemäß deren Größe, sondern führt durch seine schräge Ausrichtung zu einer längeren Verweilzeit der Pflanzenteile im von den Luftturbinen 5 erzeugten Luftstrom: Die vom Rutschblech 7 fallenden Pflanzenteile gleiten bzw. rutschen mit einer Geschwindigkeit, welche von einer Neigung des Siebes 6 abhängt, auf dem Sieb 6 nach unten, wobei sie dem Luftstrom ausgesetzt sind; ihre Verweilzeit im Luftstrom ist größer, als wenn sie vom Rutschblech 7 ungehindert und im freien Fall zum Förderelement 2 fallen würden. Für den Fall, dass die über das Rutschblech 7 eingebrachten Pflanzenteile Maisspindeln und Maislieschen sind, werden in dem Bereich zwischen Rutschblech 7 und Förderelement 2 die Maislieschen durch das Sieb 6 und durch den von den Luftturbinen 5 erzeugten Luftstrom von den Maisspindeln getrennt, wobei die Maislieschen durch den Luftstrom aus der Vorrichtung 1 ausgebracht und gleichmäßig verteilt werden und die Maisspindeln durch das Sieb 6 zum Förderelement 2 gelangen. Die Maisspindeln werden sodann von dem als Förderschnecke ausgebildeten Förderelement 2 zu einem Fördergebläse 3 gefördert und diesem kontinuierlich und gleichmäßig zugeführt, worauf sie vom Fördergebläse 3 über ein Wurfrohr 4 in eine vorbestimmte Höhe gefördert, beispielsweise in einen separaten Anhänger ausgeworfen sowie in diesem gesammelt werden.

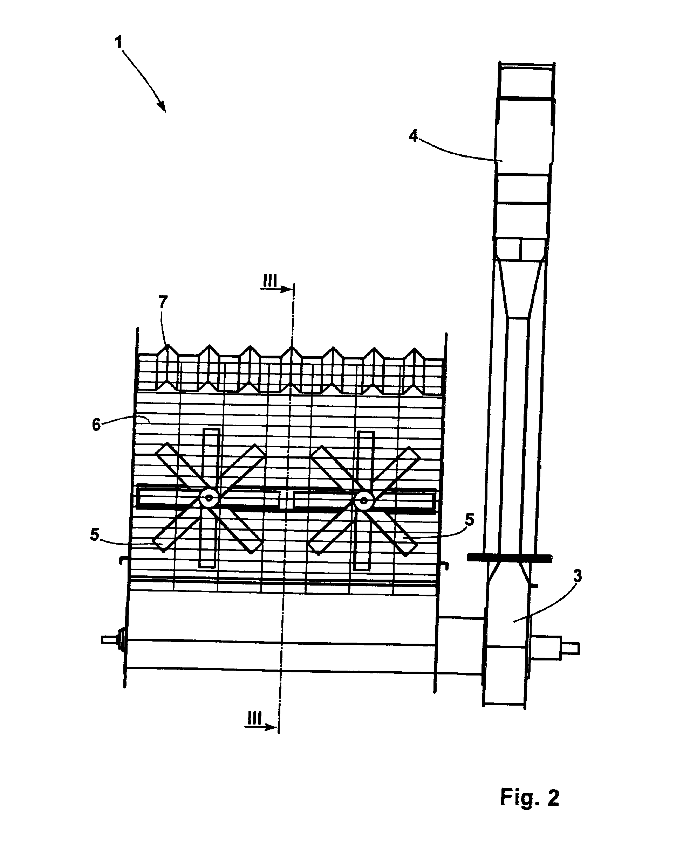

In Fig. 2 ist eine Frontalansicht auf die Vorrichtung 1 gemäß Fig. 1 dargestellt. Die Blickrichtung des Betrachters ist dem von den Luftturbinen 5 erzeugten Luftstrom entgegengesetzt. Über das Rutschblech 7 auf das Sieb 6 gelangende Maislieschen rutschen auf dem Sieb 6 in Richtung des Betrachters und werden von dem Luftstrom zum Betrachter geblasen bzw. verfrachtet.

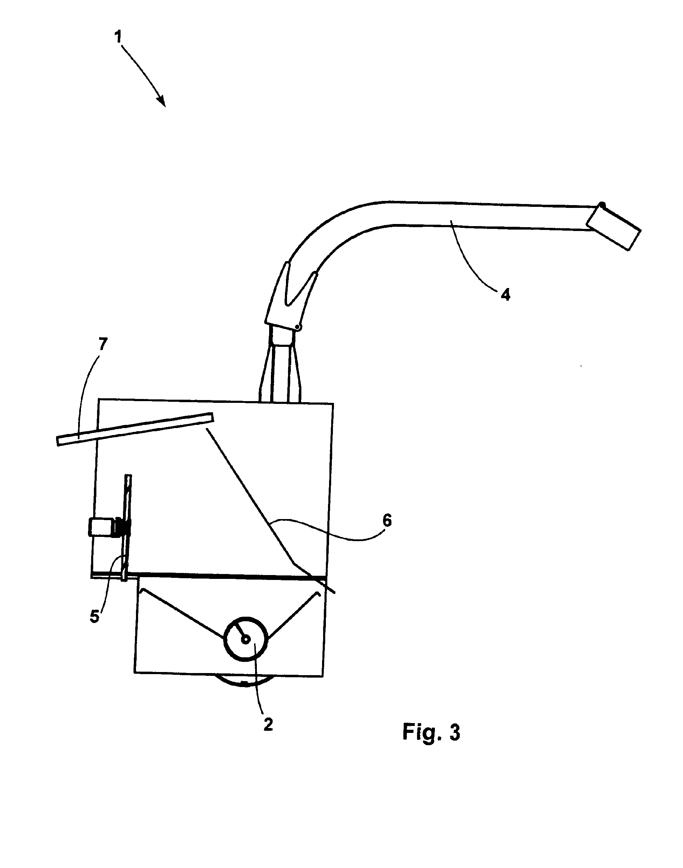

In Fig. 3 ist ein Schnitt durch die Vorrichtung 1 dargestellt, welcher entlang der Linie III-III in Fig. 2 führt. In Fig. 3 ist das Sieb 6 mit einem Knick dargestellt; im Bereich des Knickes kann ein Scharnier angebracht sein, welches das Sieb 6 in zwei Teile teilt. So kann der untere Teil des Siebes 6 aufklappbar ausgeführt sein, wodurch das Förderelement 2 zur Reinigung leichter zugänglich ist.

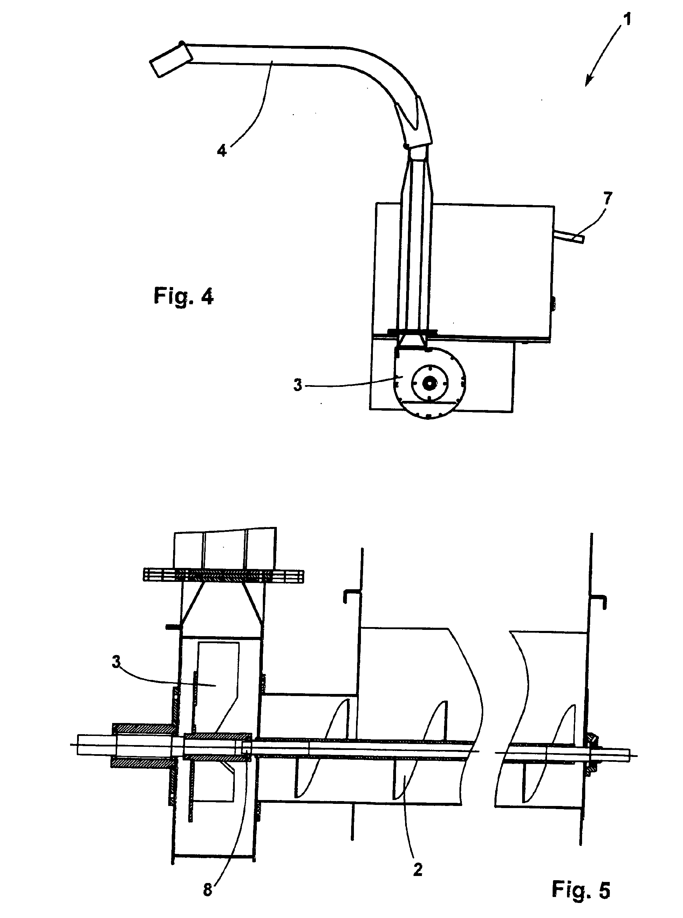

In Fig. 4 ist eine Seitenansicht der Vorrichtung 1 dargestellt. Gezeigt ist die Seite mit Fördergebläse 3 und Wurfrohr 4.

Fig. 5 zeigt einen Schnitt durch die Vorrichtung 1 entlang einer Drehachse von Fördergebläse 3 und als Förderschnecke ausgeführtem Förderelement 2. Wellen des Fördergebläses 3 und der Förderschnecke sind koaxial angeordnet und mit einem Wälzlager 8 gegeneinander verdrehbar verbunden. Somit können Fördergebläse 3 und Förderschnecke mit unterschiedlichen Rotationsgeschwindigkeiten betrieben werden. Durch eine solche Anordnung kann eine mit dem Gehäuse verbundene Stütze im Bereich zwischen Fördergebläse 3 und Förderschnecke eingespart werden, wodurch ein größtmöglicher Querschnitt für die von der Förderschnecke zum Fördergebläse 3 geförderten Pflanzenteile erreicht wird.

## Patentansprüche

1. Vorrichtung (1) zum Aussondern und Fördern von insbesondere kontinuierlich in einer Erntemaschine anfallenden Pflanzenteilen, umfassend ein Förderelement (2) und ein im Bereich eines Endes des Förderelementes (2) angeordnetes Fördergebläse (3),
**dadurch gekennzeichnet,**
**dass** zumindest eine Luftturbine (5) vorgesehen ist, welche in einem Bereich über dem Förderelement (2) einen Luftstrom auf die in die Vorrichtung (1) eingebrachten und zum Förderelement (2) fallenden Pflanzenteile erzeugt.

2. Vorrichtung (1) nach Anspruch 1, **dadurch gekennzeichnet, dass** der durch die zumindest eine Luftturbine (5) erzeugte Luftstrom in etwa waagrecht gerichtet ist.

3. Vorrichtung (1) nach Anspruch 1 oder 2, **dadurch gekennzeichnet, dass** ein Sieb (6) in einem Bereich oberhalb des Förderelementes (2) vorgesehen ist, auf welches die in die Vorrichtung (1) eingebrachten Pflanzenteile fallen und durch welches der von der zumindest einen Luftturbine (5) erzeugte Luftstrom gerichtet ist.

4. Vorrichtung (1) nach Anspruch 3, **dadurch gekennzeichnet, dass** das Sieb (6) geneigt ausgerichtet und derart angeordnet ist, dass Pflanzenteile, welche nicht durch das Sieb (6) zum Förderelement (2) fallen, aus der Vorrichtung (1) ausscheiden.

5. Vorrichtung (1) nach Anspruch 3 oder 4, **dadurch gekennzeichnet, dass** ein Antrieb zum Rütteln des Siebes (6) vorgesehen ist.

6. Vorrichtung (1) nach einem der Ansprüche 1 bis 5, **dadurch gekennzeichnet, dass** im Bereich oberhalb des Förderelementes (2) ein Rutschblech (7) zum Einbringen der Pflanzenteile vorgesehen ist.

7. Vorrichtung (1) nach einem der Ansprüche 1 bis 6, **dadurch gekennzeichnet, dass** das Förderelement (2) als Förderschnecke ausgeführt ist.

8. Vorrichtung (1) nach Anspruch 7, **dadurch gekennzeichnet, dass** die Förderschnecke und das Fördergebläse (3) koaxial angeordnet und deren Wellen durch ein Lager, insbesondere ein Wälzlager (8) verbunden sind.

9. Vorrichtung (1) nach einem der Ansprüche 1 bis 8, **dadurch gekennzeichnet, dass** die Vorrichtung (1) an eine landwirtschaftliche Maschine ankoppelbar ist.

10. Vorrichtung (1) nach Anspruch 9, **dadurch gekennzeichnet, dass** das Fördergebläse (3), das Förderelement (2) und die zumindest eine Luftturbine (5) an eine externe Energieversorgung, insbesondere an eine rotierende Welle der landwirtschaftlichen Maschine, ankoppelbar sind.

11. Vorrichtung (1) nach einem der Ansprüche 1 bis 10, **dadurch gekennzeichnet, dass** im Bereich oberhalb des Fördergebläses (3) ein Wurfrohr (4) angeordnet ist, über das die Pflanzenteile durch das Fördergebläse (3) förderbar sind, wobei das Wurfrohr (4) vorzugsweise schwenkbar, höhenverstellbar und/oder einklappbar ist.

12. Vorrichtung (1) nach Anspruch 11, **dadurch gekennzeichnet, dass** das Wurfrohr (4) hydraulisch gesteuert ist.

13. Verwendung einer Vorrichtung (1) gemäß einem der Ansprüche 1 bis 12 zum Fördern und Trennen von Maisspindeln und Maislieschen.

14. Verfahren zum Aussondern und Fördern von insbesondere kontinuierlich in einer Erntemaschine anfallenden Pflanzenteilen, insbesondere von Maisspindeln, bei dem die Pflanzenteile mittels eines Fördergebläses (3) über eine vorgegebene Höhe gefördert werden, **dadurch gekennzeichnet, dass** ein zusätzlicher Luftstrom erzeugt und auf die einfallenden Pflanzenteile gerichtet wird, sodass leichtere von schwereren Pflanzenteilen, insbesondere Maislieschen von den Maisspindeln, getrennt werden.

15. Verfahren nach Anspruch 14, **dadurch gekennzeichnet,**
a) **dass** das Trennen der leichteren von den schwereren Pflanzenteilen durch den zusätzlichen Luftstrom vor dem Fördern mittels des Fördergebläses (3) erfolgt und/oder
b) **dass** der zusätzliche Luftstrom mit zumindest einer Luftturbine (5) erzeugt und in etwa waagrecht ausgerichtet wird und/oder
c) **dass** die leichteren Pflanzenteile, insbesondere die Maislieschen, durch den Luftstrom weggeblasen und auf einem Boden gleichmäßig verteilt werden und/oder
d) **dass** zum Trennen der leichteren von den schwereren Pflanzenteilen, insbesondere der Maislieschen von den Maisspindeln, zusätzlich ein Sieb (6) verwendet wird und/oder
e) **dass** der Luftstrom derart ausgerichtet wird, dass dieser durch das Sieb (6) hindurchführt und die leichteren Pflanzenteile, insbesondere die Maislieschen, von diesem weggeblasen werden und/oder
f) **dass** die Pflanzenteile mit einem Förderelement (2), insbesondere mit einer Förderschnecke, zum Fördergebläse (3) gefördert werden und/oder
g) **dass** der zusätzliche Luftstrom zum Trennen der leichteren von den schwereren Pflanzenteilen vor dem Förderelement (2) erzeugt und auf die in Richtung zum Förderelement (2) einfallenden Pflanzenteile gerichtet wird und/oder
h) **dass** die Pflanzenteile zumindest teilweise mittels eines Wurfrohres (4) über eine vorgegebene Höhe gefördert werden.
